# EUROPÄISCHE PATENTANMELDUNG

(11) **EP 4 636 273 A1**
(43) Veröffentlichungstag der Anmeldung: **22.10.2025**
(21) Anmeldenummer: 25167764.7
(22) Anmeldetag: 01.04.2025
(51) Int. Cl.: F16C 32/04

(54) **MAGNETLAGERVORRICHTUNG UND ELEKTROMAGNETISCHER DREHANTRIEB**

(30) Priorität: 16.04.2024 EP 24170637
(71) Anmelder: Levitronix GmbH, 8048 Zürich (CH)
(72) Erfinder: Steinert, Daniel Dr., 8180 Bülach (CH)
(74) Vertreter: IPS Irsch AG

(57) **Zusammenfassung**

Magnetlagervorrichtung zur berührungslos magnetischen Lagerung eines Rotors (3), der einen scheibenförmigen oder ringförmigen magnetisch wirksamen Kern (31) umfasst, wobei die Magnetlagervorrichtung einen Stator (2) aufweist, welcher eine Mehrzahl von Spulenkernen (25) umfasst, von denen jeder einen Längsschenkel (26) umfasst, welcher sich von einem ersten Ende (261) in einer axialen Richtung (A) bis zu einem zweiten Ende (262) erstreckt, sowie einen Querschenkel (27), welcher an dem zweiten Ende (262) des Längsschenkels angeordnet ist, und sich in einer radialen Richtung (R) erstreckt, die senkrecht zur axialen Richtung (A) ist, wobei am ersten Ende (261) ein Rückschluss (28) angeordnet ist, der die ersten Enden (261) aller Längsschenkel (26) verbindet, wobei an jedem Längsschenkel (26) mindestens eine konzentrierte Wicklung (61) vorgesehen ist, welche den jeweiligen Längsschenkel (26) umgibt, wobei der Stator (2) ferner eine becherförmige Ausnehmung (211) aufweist, in welche der Rotor (3) einsetzbar ist, wobei die becherförmige Ausnehmung (211) an einem axialen Ende des Stators (2) angeordnet ist, und wobei die Querschenkel (27) um die becherförmige Ausnehmung (211) herum angeordnet sind, wobei der Stator (2) eine Schirmung (4) umfasst, welche sich in Umfangsrichtung entlang einer Mehrzahl von Spulenkernen (25) erstreckt, und wobei sich die Schirmung (4) in axialer Richtung (A) von einem ersten Schirmungsende (41) bis zu einem zweiten Schirmungsende (42) erstreckt. Ferner wird ein elektromagnetischer Drehantrieb mit einer solchen Magnetlagervorrichtung vorgeschlagen.

## Beschreibung

Die Erfindung betrifft eine Magnetlagervorrichtung gemäss dem Oberbegriff des unabhängigen Patentanspruchs und einen elektromagnetischen Drehantrieb mit einer solchen Magnetlagervorrichtung.

Magnetlagervorrichtungen zur berührungslos magnetischen Lagerung eines Rotors haben den Vorteil, dass sie ohne mechanische Lager für den Rotor auskommen. Der Rotor wird mittels magnetischer Kräfte gelagert bzw. stabilisiert, die von einem Stator der Magnetlagervorrichtung generiert werden. Aufgrund der Abwesenheit von mechanischen Lagern eignen sich solche Magnetlagervorrichtungen insbesondere für Pump-, Misch-, Zentrifugier- oder Rührvorrichtungen, mit denen sehr empfindliche Substanzen gefördert werden, beispielsweise Blutpumpen, oder bei denen sehr hohe Anforderungen an die Reinheit gestellt werden, beispielsweise in der pharmazeutischen Industrie oder in der biotechnologischen Industrie, oder mit denen abrasive oder aggressive Substanzen gefördert werden, welche mechanische Lager sehr schnell zerstören würden, beispielsweise Pumpen oder Mischer für Slurry, Schwefel-, Phosphorsäure oder andere Chemikalien in der Halbleiterindustrie.

In der biotechnologischen Industrie werden solche Magnetlagervorrichtungen beispielsweise im Zusammenhang mit Bioreaktoren eingesetzt, z. B. bei Zentrifugalpumpen zum Fördern der Fluide in den oder aus dem Bioreaktor, oder bei Mischvorrichtungen, welche die Fluide in dem Bioreaktor durchmischen. In der Halbleiterindustrie werden solche Magnetlagervorrichtung nicht nur für das Fördern aggressiver oder abrasiver Substanzen verwendet, sondern beispielsweise auch für Rotationsvorrichtungen, mit denen Wafer rotiert werden.

Auch ist es bekannt, Magnetlagervorrichtungen für Viskosimeter zu verwenden.

Eine vorteilhafte und an sich bekannte Ausführungsform einer Magnetlagervorrichtung ist die Ausführung in Tempelbauweise, auf die sich auch die vorliegende Erfindung bezieht.

Das Charakteristische der Tempelbauweise ist es, dass der Stator der Magnetlagervorrichtung eine Mehrzahl von Spulenkernen aufweist, von denen jeder einen Längsschenkel umfasst, der sich von einem ersten Ende in einer axialen Richtung bis zu einem zweiten Ende erstreckt. Mit der axialen Richtung ist dabei diejenige Richtung gemeint, welche durch die Solldrehachse des Rotors definiert ist, welcher mit der Magnetlagervorrichtung gelagert wird. Die Solldrehachse ist diejenige Drehachse, um welche der Rotor im Betriebszustand rotiert, wenn er bezüglich des Stators in einer zentrierten und unverkippten Position ist. Jeder Spulenkern umfasst zusätzlich zu dem Längsschenkel einen Querschenkel, welcher jeweils an dem zweiten Ende des Längsschenkels angeordnet ist, und welcher sich in radialer Richtung - üblicherweise nach innen - erstreckt, wobei die radiale Richtung senkrecht zur axialen Richtung ist. Der Querschenkel erstreckt sich also im Wesentlichen rechtwinklig zum Längsschenkel. Die Spulenkerne haben jeweils die Form eines L, wobei die Querschenkel die kurzen Schenkel des L bilden. Der zu lagernde Rotor ist dann zwischen den Querschenkeln angeordnet.

Die Mehrzahl der Längsschenkel, die sich in axialer Richtung erstrecken und an die Säulen eines Tempels erinnern, hat dieser Bauweise ihren Namen gegeben.

In einer Ausführungsform hat der Stator der Magnetlagervorrichtung beispielsweise sechs Spulenkerne, die kreisförmig und äquidistant um eine becherförmige Ausnehmung herum angeordnet sind, in welche der Rotor eingesetzt werden kann. Die ersten Enden der Längsschenkel sind üblicherweise in Umfangsrichtung durch einen Rückschluss verbunden, welcher der magnetischen Flussführung dient. Der zu lagernde Rotor umfasst einen magnetisch wirksamen Kern, beispielsweise eine permanentmagnetische Scheibe oder einen permanentmagnetischen Ring, der zwischen den radial innenliegenden Enden der Querschenkel angeordnet ist und im Betriebszustand um die axiale Richtung rotiert, wobei der Rotor berührungslos magnetisch bezüglich des Stators gelagert ist.

Für solche Magnetlagervorrichtungen ist es nicht notwendigerweise so, dass der magnetisch wirksame Kern des Rotors permanentmagnetisch ausgestaltet sein muss. Es sind auch solche Ausgestaltungen bekannt, bei denen der magnetisch wirksame Kern des Rotors permanentmagnetfrei, also ohne Permanentmagnete ausgestaltet ist. Der magnetisch wirksame Kern des Rotors ist dann beispielsweise ferromagnetisch ausgestaltet und besteht beispielsweise aus Eisen, Nickel-Eisen, Kobalt-Eisen, Silizium-Eisen, Mu-Metall oder einem anderen ferromagnetischen Werkstoff.

Ferner sind Ausgestaltungen möglich, bei denen der magnetisch wirksame Kern des Rotors sowohl ferromagnetische Materialien als auch permanentmagnetische Materialien umfasst. Beispielsweise können Permanentmagnete in einen ferromagnetischen Grundkörper eingelegt bzw. eingesetzt werden. Solche Ausgestaltungen sind z.B. vorteilhaft, wenn man bei grossen Rotoren die Kosten durch Einsparen von permanentmagnetischem Material reduzieren will.

Um die für die berührungslos magnetische Lagerung des Rotors notwendigen elektromagnetischen Felder zu erzeugen, tragen die Längsschenkel Wicklungen. Die Wicklungen sind beispielsweise so ausgestaltet, dass um jeden Längsschenkel herum eine konzentrierte Wicklung gewickelt ist, das heisst, die Spulenachse jeder konzentrierten Wicklung erstreckt sich jeweils in axialer Richtung. Dabei ist es typisch für die Tempelbauweise, dass die Spulenachsen der konzentrierten Wicklungen in der axialen Richtung verlaufen und, dass die konzentrierten Wicklungen nicht in der radialen Ebene angeordnet sind, in welcher der Rotor bzw. der magnetisch wirksame Kern des Rotors im Betriebszustand gelagert wird.

Es sind Ausgestaltungen möglich, bei denen auf jedem Längsschenkel genau eine konzentrierte Wicklung angeordnet ist. In anderen Ausgestaltungen sind auf jedem Längsschenkel mehrere, beispielsweise genau zwei konzentrierte Wicklungen vorgesehen. Auch sind Ausgestaltungen möglich, bei denen Wicklungen vorgesehen sind, die um zwei in Umfangsrichtung benachbarte Längsschenkel herumgewickelt sind, sodass sich diese beiden benachbarten Längsschenkel beide im Innenraum der konzentrierten Wicklung befinden.

Die Statoren der Magnetlagervorrichtungen sind in Statorgehäusen gekapselt, sodass sie den anspruchsvollen Bedingungen der vorher genannten Anwendungsgebiete gerecht werden. Meist sind die aus dem Stand der Technik bekannten Statorgehäuse aus Aluminium hergestellt, um somit ein gute Wärmeabfuhr von z.B. den Wicklungen zu gewährleisten. Es sind Gehäuse bekannt, welche Kühlfinnen umfassen, um somit die Wärmeabfuhr zu verbessern. Ebenso ist bekannt, die Gehäuse mit Beschichtungen widerstandsfähiger gegen äussere Einflüsse wie z.B. durch aggressive Chemikalien zu schützen.

Die Verwendung von Aluminium als Statorgehäuse ist aufgrund dessen guter Wärmeleitfähigkeit ideal, um eine gute Wärmeabfuhr aus dem Stator heraus zu erhalten. Allerdings hat die Verwendung von Aluminium auch Nachteile. Das Aluminiumgehäuse ist nicht nur gut wärmeleitend, sondern auch elektrisch gut leitfähig. Dies hat zur Folge, dass Wirbelströme im Statorgehäuse entstehen. Die Wicklungen des Stators erzeugen nicht nur Magnetfelder im Inneren also hin zur Mittelachse des Stators für die Lagerung und den Antrieb des Rotors, sondern es werden auch Magnetfelder erzeugt, welche ausserhalb des Stators verlaufen. Diese Magnetfelder durchdringen das gut leitfähige Aluminiumgehäuse. Im Betrieb der Magnetlagervorrichtung werden dann Wirbelströme im Gehäuse erzeugt, welche signifikante Verluste verursachen und Wärme im Gehäuse erzeugen, wodurch der Motor auch im Innern erwärmt wird.

Ausgehend von diesem Stand der Technik ist es daher eine Aufgabe der Erfindung, eine Magnetlagervorrichtung zur berührungslos magnetischen Lagerung eines Rotors mit einem scheibenförmigen oder ringförmigen magnetisch wirksamen Kern vorzuschlagen, welche geringere Wirbelstromverluste als der bisherige Stand der Technik aufweist und gleichzeitig eine effektive Wärmeabfuhr gewährleistet.

Ferner ist es eine Aufgabe der Erfindung, einen elektromagnetischen Drehantrieb mit einer solchen Magnetlagervorrichtung vorzuschlagen.

Der diese Aufgabe lösende Gegenstand der Erfindung ist durch die Merkmale des unabhängigen Patentanspruchs gekennzeichnet.

Erfindungsgemäss wird also eine Magnetlagervorrichtung vorgeschlagen, zur berührungslosen magnetischen Lagerung eines Rotors, der einen scheibenförmigen oder ringförmigen magnetisch wirksamen Kern umfasst, wobei die Magnetlagervorrichtung einen Stator mit einem Statorgehäuse aufweist, welcher eine Mehrzahl von Spulenkernen umfasst, von denen jeder einen Längsschenkel umfasst, welcher sich von einem ersten Ende in einer axialen Richtung bis zu einem zweiten Ende erstreckt, sowie einen Querschenkel, welcher an dem zweiten Ende des Längsschenkels angeordnet ist, und sich in einer radialen Richtung erstreckt, die senkrecht zur axialen Richtung ist, wobei am ersten Ende ein Rückschluss angeordnet ist, der die ersten Enden aller Längsschenkel verbindet, wobei an jedem Längsschenkel mindestens eine konzentrierte Wicklung vorgesehen ist, welche den jeweiligen Längsschenkel umgibt, wobei der Stator ferner eine becherförmige Ausnehmung aufweist, in welche der Rotor einsetzbar ist, wobei die becherförmige Ausnehmung an einem axialen Ende des Stators angeordnet ist, und wobei die Querschenkel um die becherförmige Ausnehmung herum angeordnet sind. Der Stator umfasst eine Schirmung, welche sich in Umfangsrichtung entlang einer Mehrzahl von Spulenkernen erstreckt, wobei sich die Schirmung in axialer Richtung von einem ersten Schirmungsende bis zu einem zweiten Schirmungsende erstreckt.

Durch die Verwendung einer Schirmung wird verhindert, dass Magnetfelder aus dem Stator nach aussen, also aus einem Statorgehäuse heraus, austreten können. Die Magnetfelder durchdringen nicht mehr das Statorgehäuse, sondern sie werden innerhalb des Statorgehäuses geführt, was zu einer Reduktion der Wirbelstromverluste führt.

Ein weiterer Vorteil durch die Verwendung einer Schirmung im Inneren des Statorgehäuses ist, dass das Statorgehäuse weiterhin aus einem elektrisch gut leitfähigen Material, wie z.B. Aluminium hergestellt werden kann. Dies hat zur Folge, dass die Wärmeabfuhr der Wärme, welche im Betrieb des Stators entsteht, zuverlässig funktioniert.

Die Schirmung erstreckt sich in Umfangsrichtung radial aussenliegend entlang einer Mehrzahl von Spulenkernen. Dabei kann die Schirmung in Umfangsrichtung offen, d.h. die Schirmung erstreckt sich nur entlang einer Mehrzahl der Spulenkerne oder geschlossen, d.h. die Schirmung erstreckt sich entlang aller Spulenkerne, sein. Ebenso sind Ausgestaltungen möglich, wobei in der Schirmung Aussparungen eingebracht sind. Diese Aussparungen können z.B. für die Durchführung von Anschlüssen durch die Schirmung, wie z.B. Kabel, vorgesehen sein.

Gemäss einer bevorzugten Ausgestaltung ist die Schirmung radial aussenliegend um die Spulenkerne herum angeordnet und erstreckt sich in Umfangsrichtung über einen Winkel von mindestens 120 Grad, bevorzugt mindestens 240 Grad.

Gemäss einer bevorzugten Ausgestaltung ist die Schirmung ringförmig ausgestaltet.

Aufgrund der Bauweise des Stators ist es vorteilhaft, eine ringförmig ausgestaltete Schirmung zu verwenden. Es ist aber auch möglich, dass die Schirmung polygonal, z. B. sechseckig oder achteckig ausgestaltet ist. Die Ausgestaltung der Schirmung kann individuell an die Form des entsprechenden Stators bzw. die entsprechenden Spulenkerne und /oder deren Anordnung angepasst werden.

In einer bevorzugten Ausgestaltung umfasst die Schirmung mindestens zwei Schirmungssegmente, von denen sich jedes von einem ersten Segmentende in Umfangsrichtung zu einem zweiten Segmentende erstreckt.

Ferner ist es bevorzugt, dass die Schirmungssegmente in Umfangsrichtung benachbart zueinander angeordnet sind. Ebenso sind Ausgestaltungen möglich, wobei die Schirmungssegmente in axialer Richtung benachbart zueinander angeordnet sind.

Benachbart zueinander angeordnet umfasst in diesem Kontext, dass zwischen den Schirmungssegmenten ein Abstand vorhanden ist, sowie, dass diese stumpf kontaktiert sind, sowie, dass diese überlappen.

Gemäss einer anderen bevorzugten Ausgestaltung ist die Schirmung als ein Band ausgestaltet, wobei das Band mehrere Bandwicklungen formt, die bezüglich der radialen Richtung flächig aneinander anliegen und dabei besonders bevorzugt gegeneinander isoliert sind.

Hierbei kann das Band aus einem Elektroblech, bevorzugt einem kornorientieren Elektroblech hergestellt sein. Unter einem Elektroblech wird nach der allgemeinen Definition ein weichmagnetischer Werkstoff für Magnetkerne verstanden. Ebenso besteht die Möglichkeit, Mu-Metall als Material für das Band zu verwenden.

Der Vorteil hierbei ist, dass solche Bänder eine häufige Verwendung in der Technik finden und somit kostengünstig sind. Des Weiteren ist es vorteilhaft, dass ein Band relativ einfach hergestellt werden kann und es möglich ist, dass die Bandwicklungen direkt bei der Herstellung gegeneinander isoliert werden können.

Ferner, gemäss einer anderen bevorzugten Ausgestaltung ist es bevorzugt, dass das erste Schirmungsende bezüglich der axialen Richtung auf derselben Höhe angeordnet ist, wie ein erstes Wicklungsende.

Mit dem ersten Wicklungsende ist für den Fall, dass am Längsschenkel genau eine Wicklung angeordnet ist, das Ende dieser Wicklung gemeint, welches sich in axialer Richtung näher am ersten Ende des Längsschenkels befindet. Das erste Wicklungsende kann auch als axial unteres Wicklungsende angesehen werden, wenn das zweite Wicklungsende bezüglich der axialen Richtung näher am zweiten Ende des Längsschenkels angeordnet ist und somit ein axial oberes Wicklungsende darstellt. Für den Fall, dass mehr als eine Wicklung am Längsschenkel angeordnet sind, ist das erste Wicklungsende, das erste Wicklungsende derjenigen Wicklung, welche in axialer Richtung näher am ersten Ende des Längsschenkels angeordnet ist. In anderen Worten, das erste Wicklungsende ist das axial untere Ende der axial untersten Wicklung, welche am Längsschenkel angeordnet ist. Dabei gilt wieder die Definition, dass mit «unten» näher am ersten Ende des Längsschenkels und mit «oben» näher am zweiten Ende des Längsschenkels, gemeint ist.

Die Anordnung des ersten Schirmungsendes bezüglich der axialen Richtung auf derselben Höhe wie das erste Wicklungsende ist vorteilhaft, da die Wicklungen hauptverantwortlich für Streufelder sind, weil dort die Magnetfelder erzeugt werden. Somit sorgt die Schirmung für eine effektive Abschirmung der Magnetfelder an dem Ort, an welchen sie entstehen, und verhindert somit ein Eindringen in das Statorgehäuse.

Ebenso ist es natürlich möglich, dass das erste Schirmungsende in axialer Richtung unterhalb des ersten Wicklungsendes angeordnet ist. Dies kann z.B. aus Stabilitätsgründen vorteilhaft sein.

In einer anderen bevorzugten Ausgestaltung ist das erste Schirmungsende bezüglich der axialen Richtung oberhalb des ersten Wicklungsendes angeordnet.

Vor allem im oberen Bereich des Stators, also in dem Bereich, welcher sich in axialer Richtung näher am zweiten Ende des Längsschenkels befindet, sind die Streufelder besonders stark. Der Grund hierfür ist, dass der Eisenkreis dort nicht geschlossen ist, und somit führt der magnetisch wirksame Kern des Rotors nur sein eigenes Magnetfeld aber nicht das der Wicklungen. Hingegen sind im unteren Bereich des Stators, also in dem Bereich, welcher sich in axialer Richtung näher am ersten Ende des Längsschenkels befindet, die Magnetfelder durch einen Rückschluss gut geführt, und es treten deutlich weniger Streufelder auf. Somit ist es vorteilhaft, die Schirmung im oberen Bereich des Stators anzuordnen. Eine geringere Ausdehnung der Schirmung in axialer Richtung hat des Weiteren auch den Vorteil, dass die Möglichkeit besteht, den Stator kompakter zu bauen, wodurch weniger Material benötigt wird, was sich in geringen Kosten niederschlägt.

Gemäss einer bevorzugten Ausgestaltung erstreckt sich die Schirmung bezüglich der axialen Richtung bis zu einem Gehäusedeckel des Stators, wobei der Gehäusedeckel an einem ersten Ende des Stators angeordnet ist.

Es sind dabei unterschiedliche Ausgestaltungen des Gehäusedeckels möglich und abhängig von dessen Ausgestaltung kann sich die Schirmung bis zu dem Gehäusedeckel erstrecken, sodass ein Kontakt zwischen beiden möglich ist. Für den Fall, dass der Gehäusedeckel aus Kunststoff hergestellt ist, kann sich die Schirmung in Kontakt mit dem Gehäusedeckel befinden, da der Kunststoffgehäusedeckel nicht leitfähig ist. Im Fall, dass der Gehäusedeckel aus elektrisch leitfähigem Material hergestellt ist, sollte ein Abstand zwischen Schirmung und Gehäusedeckel vorhanden sein, da ansonsten der Effekt der Reduktion der Wirbelstromverluste reduziert werden könnte. Es ist auch möglich, dass die Schirmung an ihrem zweiten Schirmungsende über ihre gesamte Ausdehnung in Umfangsrichtung einen dünnen Bereich, der sich in axialer Richtung erstreckt, aufweist, der aus einem elektrisch nicht leitfähigen Material hergestellt ist. Ebenso ist es möglich solch eine Isolationsschicht durch Beschichten der Schirmung am zweiten Schirmungsende zu erreichen.

Eine maximal mögliche Erstreckung der Schirmung bis zu dem Gehäusedeckel ist vorteilhaft, da wie bereits beschrieben, die meisten Streufelder am axial oberen Ende des Stators auftreten.

Ferner ist es bevorzugt, die Schirmung aus einem hochpermeablen Material herzustellen, bevorzugt aus einem hochpermeablen Material umfassend Eisen und/oder Silizium.

Unter einem hochpermeablen Material wird im Rahmen dieser Anmeldung ein Material verstanden, dass eine Permeabilitätszahl µ > 40 aufweist. Weitere Eigenschaften solch eines Materials sind unter anderem, dass es eine geringe elektrische Leitfähigkeit und geringe Hystereseverluste aufweist.

Gemäss einer bevorzugten Ausgestaltung ist die Schirmung als eine Beschichtung ausgestaltet, welche vorzugsweise auf einer radial innenliegenden Seite des Statorgehäuses aufgebracht ist. Die Beschichtung hat den Vorteil, dass diese auf das sowieso vorhandene Statorgehäuse mit Hilfe der üblichen, aus dem Stand der Technik bekannten Beschichtungsmethoden (z.B. PVD-Methode, thermisches Spritzen) aufgebracht werden kann. Dadurch wird kein zusätzliches Material (wie z.B. Elektroblech) für die Schirmung benötigt und die Schirmung kann bereits bei der Herstellung des Statorgehäuses aufgebracht werden, was einen zusätzlichen Arbeitsschritt spart. Bevorzugt umfasst die Beschichtung Eisen und/oder kunststoffgebundene Metallpartikel. Bevorzugt ist die Schichtdicke grösser 50 Mikrometer .

Gemäss einer bevorzugten Ausgestaltung ist die Schirmung als Blech ausgestaltet. Dabei kann das Blech Eisen und/oder Silizium enthalten. Ebenso besteht die Möglichkeit ein Mu-Metall Blech und/oder ein Elektroblech, bevorzugt ein kornorientiertes Elektroblech, zu verwenden. Es ist möglich, dass das Blech ringförmig gebogen wird und somit passgenau an die äussere Form der Spulenkerne und des Statorgehäuses angepasst werden kann.

Ferner ist es bevorzugt, dass jeder Spulenkern geblecht aus Elementen hergestellt ist, wobei die Elemente in Umfangsrichtung des Stators gestapelt sind.

Das bedeutet, dass mehrere Bleche in Form der Spulenkerne gegeneinander isoliert in Umfangsrichtung gestapelt sind. Die geblechte Ausgestaltung der Spulenkerne verhindert Wirbelströme für Magnetfelder, welche in Blechrichtung verlaufen also Felder, welche in axialer Richtung dem Längsschenkel folgen und in radialer Richtung dem Querschenkel folgen. Als bevorzugte Materialien können hier wiederum Elektroblech oder Mu-Metallblech verwendet werden.

Gemäss einer weiteren bevorzugten Ausgestaltung sind an jedem Längsschenkel zwei konzentrierte Wicklungen vorgesehen, von denen jede den jeweiligen Längsschenkel umgibt, und die bezüglich der axialen Richtung benachbart zueinander angeordnet sind.

Gemäss einer weiteren bevorzugten Ausgestaltung umfasst die Schirmung mindestens zwei Schirmungsteile, die bezüglich der axialen Richtung benachbart zueinander angeordnet sind. Das heisst, die mindestens zwei Schirmungsteile können bezüglich der axialen Richtung gestapelt sein. Dabei ist es möglich, dass die einzelnen Schirmungsteile aus unterschiedlichen Materialien gefertigt sind. Ebenso ist es möglich, dass die einzelnen Schirmungsteile unterschiedlich in ihrer Form ausgestaltet sind.

Ferner ist es bevorzugt, dass jeder Spulenkern an einem axial oberen Ende eine Abrundung aufweist, welche den Spulenkern aus der axialen Richtung in die radiale Richtung umlenkt.

Durch die Erfindung wird ferner ein elektromagnetischer Drehantrieb, der als Tempelmotor ausgestaltet ist, vorgeschlagen, wobei der elektromagnetische Drehantrieb eine erfindungsgemässe Magnetlagervorrichtung umfasst, sowie einen Rotor mit einem scheibenförmigen oder ringförmigen magnetisch wirksamen Kern, wobei der Rotor in die becherförmige Ausnehmung einsetzbar ist, und wobei der Rotor als Rotor des elektromagnetischen Drehantriebs ausgestaltet ist.

Solche elektromagnetischen Drehantriebe sind auch unter dem Begriff des lagerlosen Motors bekannt. Mit dem Begriff lagerloser Motor ist dabei ein elektromagnetischer Drehantrieb gemeint, bei welchem der Rotor vollkommen magnetisch bezüglich des Stators gelagert ist, wobei keine separaten magnetischen Lager vorgesehen sind.

Weitere vorteilhafte Massnahmen und Ausgestaltungen der Erfindung ergeben sich aus den abhängigen Ansprüchen.

Im Folgenden wird die Erfindung anhand von Ausführungsbeispielen und anhand der Zeichnung näher erläutert. In der Zeichnung zeigen:
- Fig. 1:: eine perspektivische Darstellung eines ersten Ausführungsbeispiels einer erfindungsgemässen Magnetlagervorrichtung, wobei ein Teil des Statorgehäuses entfernt ist,
- Fig. 2:: eine Schnittdarstellung des ersten Ausführungsbeispiels einer Magnetlagerlagervorrichtung aus Fig. 1,
- Fig. 3:: eine Schnittdarstellung eines zweiten Ausführungsbeispiels einer erfindungsgemässen Magnetlagerlagervorrichtung,
- Fig. 4:: eine Schnittdarstellung eines dritten Ausführungsbeispiels einer erfindungsgemässen Magnetlagerlagervorrichtung,
- Fig. 5:: eine Schnittdarstellung eines vierten Ausführungsbeispiels einer erfindungsgemässen Magnetlagerlagervorrichtung,
- Fig. 6:: eine perspektivische Darstellung eines fünften Ausführungsbeispiels einer erfindungsgemässen Magnetlagervorrichtung, wobei ein Teil des Statorgehäuses entfernt ist, und
- Fig. 7:: eine Schnittdarstellung eines sechsten Ausführungsbeispiels einer erfindungsgemässen Magnetlagerlagervorrichtung.

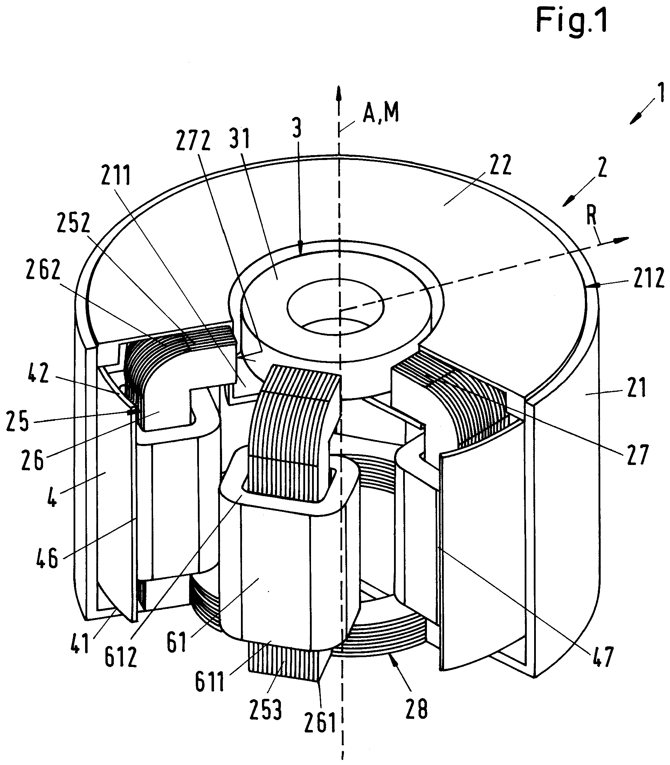

Fig. 1 zeigt eine perspektivische Darstellung eines ersten Ausführungsbeispiels einer erfindungsgemässen Magnetlagervorrichtung, die gesamthaft mit dem Bezugszeichen 1 bezeichnet ist. Die Magnetlagervorrichtung 1 ist für die berührungslos magnetische Lagerung eines Rotors 3 ausgestaltet, der einen scheibenförmigen oder ringförmigen magnetisch wirksamen Kern 31 umfasst. Die Magnetlagervorrichtung 1 ist gemäss der Tempelbauweise ausgestaltet und umfasst einen Stator 2. Der Stator 2 umfasst ein Statorgehäuse 21, wobei in Fig. 1 ein Teil des Statorgehäuses 21 zur besseren Übersicht entfernt ist, wobei an einem ersten Ende des Stators 22 ein Gehäusedeckel 212 angeordnet ist, welcher mit dem Statorgehäuse 21 verbunden und abgedichtet ist, sodass keine unerwünschten Stoffe in das Innere des Statorgehäuses 21 eindringen können.

Das Statorgehäuse 21 ist meist aus Metall, bevorzugt aus Aluminium hergestellt, der Gehäusedeckel 212 ist in diesem Fall aus einem Kunststoff, bevorzugt Polypropylen. Die Verbindung des Statorgehäuses 21 und des Gehäusedeckels 212 erfolgt bevorzugterweise durch Schweissen oder Kleben. Es ist aber auch möglich, das Statorgehäuse 21 und den Gehäusedeckel 212 aus demselben Material herzustellen. Es kann z.B. auch Edelstahl als Material für das Statorgehäuse 21 und den Gehäusedeckel 212 verwendet werden.

In dem Gehäusedeckel 212 ist eine becherförmige Ausnehmung 211 vorgesehen, in die der Rotor 3 einsetzbar ist. Der Rotor 3 ist zur Rotation um eine Solldrehachse ausgestaltet. Diese Solldrehachse definiert eine axiale Richtung A. Üblicherweise stimmt die Mittelachse des Stators 2, welche sich in der axialen Richtung A erstreckt, mit der Solldrehachse überein. Die Solldrehachse bezeichnet dabei diejenige Achse, um welche sich der Rotor 3 im Betriebszustand dreht, wenn sich der Rotor 3 bezüglich des Stators 2 in einer zentrierten und unverkippten Lage befindet, so wie dies in Fig. 1 dargestellt ist.

Der Stator 2 weist eine Mehrzahl von Spulenkernen 25 - hier sechs Spulenkerne 25 - auf, von denen jeder einen Längsschenkel 26 und ein Querschenkel 27 aufweist. In der Darstellung in Fig. 1 sind nur drei Spulenkerne 25 sichtbar, die anderen drei Spulenkerne 25 sind in der Darstellung durch das Statorgehäuse 21 verdeckt. Jeder Längsschenkel 26 erstreckt sich von einem ersten Ende 261 in axialer Richtung A bis zu einem zweiten Ende 262, wobei am zweiten Ende 262 ein Querschenkel 27 angeordnet ist, welcher sich in einer radialen Richtung R erstreckt, welche senkrecht zur axialen Richtung A ist. Am ersten Ende 261 ist ein Rückschluss 28 angeordnet, der die ersten Enden 261 aller Längsschenkel 26 verbindet.

Der Stator 2 weist ferner die becherförmige Ausnehmung 211 auf, in welche der Rotor 3 einsetzbar ist, wobei die becherförmige Ausnehmung 211 an einem axialen ersten Ende 22 des Stators 2 angeordnet ist. Die Querschenkel 27 sind um die becherförmige Ausnehmung 211 herum angeordnet.

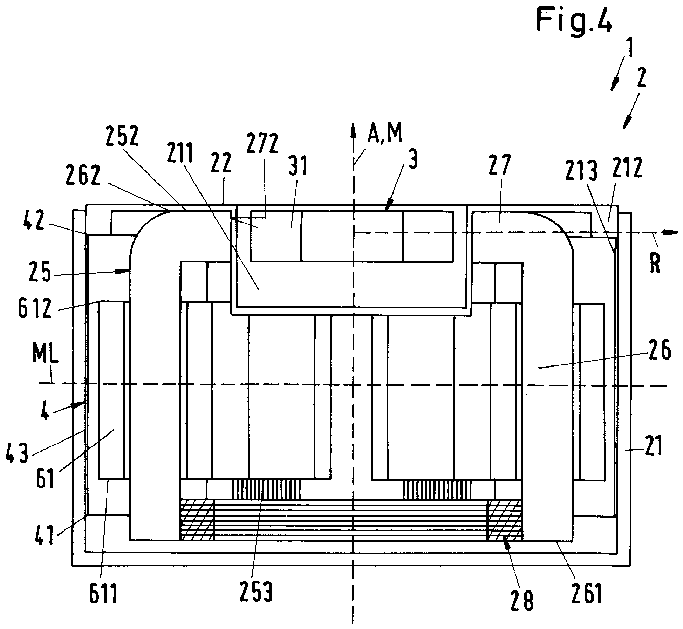

An jedem Längsschenkel 26 ist mindestens eine konzentrierte Wicklung 61 angeordnet, welche den jeweiligen Längsschenkel 26 umgibt. Bei dem ersten Ausführungsbeispiel ist an jedem Längsschenkel 26 genau eine konzentrierte Wicklung 61 vorgesehen. In anderen Ausführungsformen können an den Längsschenkeln 26 auch mehr als eine konzentrierte Wicklung angeordnet sein. Beispielsweise gibt es Ausführungsbeispiele (Fig. 4), bei denen an jedem der Längsschenkel 26 jeweils genau zwei konzentrierte Wicklungen 61a, 61b vorgesehen sind, von denen jede den jeweiligen Längsschenkel 26 umgibt, wobei die beiden auf dem gleichen Längsschenkel 26 angeordneten Wicklungen 61a, 61b bezüglich der axialen Richtung A benachbart zueinander angeordnet sind.

Die konzentrierten Wicklungen 61 dienen dazu, elektromagnetische Felder zu erzeugen, mit welchen der Rotor 3 berührungslos magnetisch in der becherförmigen Ausnehmung 211 lagerbar ist.

Ferner umfasst der Stator 2 eine Schirmung 4, welche sich in Umfangsrichtung entlang einer Mehrzahl von Spulenkernen 25 erstreckt. In axialer Richtung A erstreckt sich die Schirmung 4 von einem ersten Schirmungsende 41 bis zu einem zweiten Schirmungsende 42.

In diesem Ausführungsbeispiel ist die Schirmung 4 radial aussenliegend um die Spulenkerne 25 herum angeordnet und erstreckt sich in Umfangsrichtung über einen Winkel von 280 Grad.

Es sind aber auch Ausführungsbeispiele möglich, bei denen sich die Schirmung 4 über einen Winkel von 360 Grad erstreckt. Es sind aber auch Ausführungsbeispiele möglich bei denen sich die Schirmung 4 über mehr als 360 Grad erstreckt. Idealerweise erstreckt sich die Schirmung 4 über einen Winkel von mindestens 120 Grad, bevorzugt mindestens 240 Grad.

Sollte sich die Schirmung 4 über einen Winkel von 360 Grad erstrecken, heisst dies nicht direkt, dass diese in Umfangsrichtung geschlossen ist. Es kann weiterhin ein Abstand zwischen einem ersten Anfang 46 und einem zweiten Anfang 47 der Schirmung 4 vorhanden sein. Es ist aber auch möglich, dass der erste Anfang 46 und der zweite Anfang 47 in Kontakt steht oder sich sogar überlappen. Bei letzterem wäre eine Erstreckung der Schirmung 4 in Umfangsrichtung über einen Winkel von mehr als 360 Grad von Nöten. Ebenso sind Ausführungsbeispiele möglich, wobei in der Schirmung 4 Aussparungen eingebracht sind. Diese Aussparungen können z.B. für die Durchführung von Anschlüssen durch die Schirmung 4, wie z.B. Kabel, vorgesehen sein.

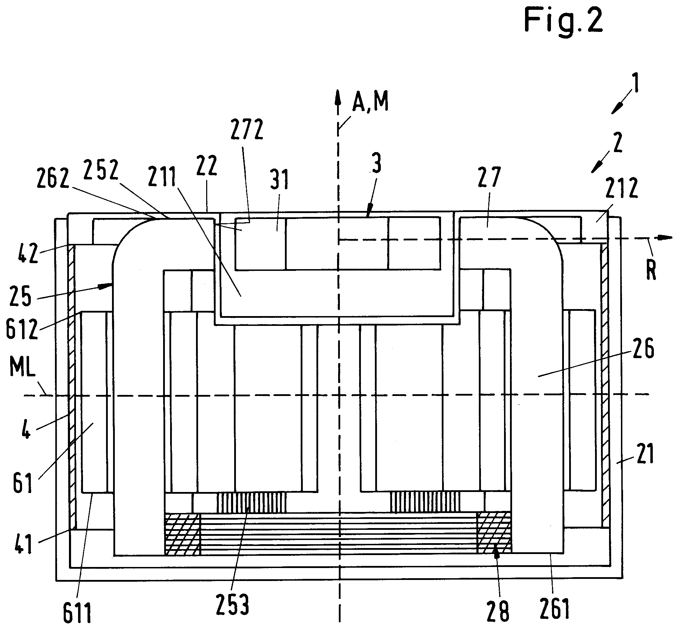

Fig. 2 zeigt zum besseren Verständnis eine Schnittdarstellung entlang der axialen Richtung A des ersten Ausführungsbeispiels der Magnetlagerlagervorrichtung aus Fig. 1.

In diesem ersten Ausführungsbeispiel ist die Schirmung 4 ringförmig ausgestaltet und das erste Schirmungsende 41 ist in axialer Richtung A unterhalb, d.h. näher am ersten Ende 261 des Längsschenkel 26 angeordnet als ein erstes Wicklungsendes 611 der Wicklung 61.

Dabei gilt wiederum die Definition, dass mit «unten» bezüglich der axialen Richtung A näher am ersten Ende 261 des Längsschenkels 26 und mit «oben» bezüglich der axialen Richtung A näher am zweiten Ende 262 des Längsschenkels 26, gemeint ist.

Mit dem ersten Wicklungsende 611 ist für den Fall, dass am Längsschenkel 26 genau eine Wicklung 61 angeordnet ist, das Ende der Wicklung 61 gemeint, welches sich in axialer Richtung A näher am ersten Ende 261 des Längsschenkels 26 befindet. Das erste Wicklungsende 611 kann auch als axial unteres Wicklungsende 611 angesehen werden, wenn das zweite Wicklungsende 612 bezüglich der axialen Richtung A näher am zweiten Ende 262 des Längsschenkels 26 angeordnet ist, und somit ein axial oberes Wicklungsende 612 darstellt.

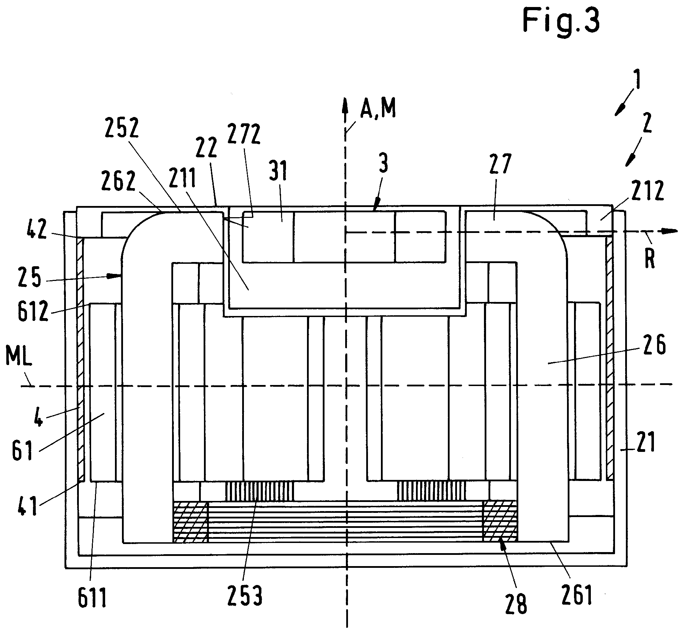

Das erste Schirmungsende 41 kann bezüglich der axialen Richtung A auch auf derselben Höhe angeordnet sein, wie das ersten Wicklungsende 611 (Fig. 3). Diese Anordnung der Schirmung 4 kann oft ausreichend sein, da die Wicklungen 61 hauptverantwortlich für Streufelder sind, weil am Ort der Wicklungen die Magnetfelder erzeugt werden. Somit sorgt die Schirmung 4 für eine effektive Abschirmung der Magnetfelder an dem Ort, an welchen sie entstehen und verhindert somit ein Eindringen in das Statorgehäuse 21. Die Anordnung des ersten Schirmungsende 41 bis unterhalb des ersten Wicklungsendes 611 in dem ersten Ausführungsbeispiel kann z.B. aus Stabilitätsgründen vorteilhaft sein.

Es sind aber auch Ausführungsbeispiele möglich, bei denen das erste Schirmungsende 41 bezüglich der axialen Richtung A oberhalb des ersten Wicklungsendes 611, dabei bevorzugt zwischen dem ersten Wicklungsende 611 und dem zweiten Wicklungsende 612 angeordnet ist.

Vor allem im oberen Bereich des Stators 2, also in dem Bereich, welcher sich in axialer Richtung A näher am zweiten Ende 262 des Längsschenkels 26 befindet, sind die Streufelder besonders stark. Der Grund hierfür ist, dass der Eisenkreis dort nicht geschlossen ist und somit führt der magnetisch wirksame Kern 31 des Rotors 3 nur sein eigenes Magnetfeld aber nicht das der Wicklungen 61. Hingegen sind im unteren Bereich des Stators 2, also in dem Bereich, welcher sich in axialer Richtung A näher am ersten Ende 261 des Längsschenkels 26 befindet, durch den Rückschluss 28 die Magnetfelder gut geführt, und es treten deutlich weniger Streufelder auf. Somit ist es vorteilhaft, die Schirmung 4 zumindest im oberen Bereich des Stators 2 anzuordnen. Eine geringere Ausdehnung der Schirmung 4 in axialer Richtung A hat des Weiteren auch dem Vorteil, dass die Möglichkeit besteht, den Stator 2 kompakter zu bauen, wodurch weniger Material benötigt wird, was sich in geringen Kosten niederschlägt.

In diesem ersten Ausführungsbeispiel erstreckt sich die Schirmung 4 bezüglich der axialen Richtung A bis zu dem Gehäusedeckel 212 des Stators 2, wobei der Gehäusedeckel 212 an dem ersten Ende 22 des Stators 2 angeordnet ist.

Hierbei ist der Gehäusedeckel 212 aus Kunststoff, bevorzugt einem Polypropylen hergestellt, und die Schirmung 4 befindet sich in Kontakt mit dem Gehäusedeckel 212, da der Gehäusedeckel 212 aus Kunststoff nicht leitfähig ist. Im Fall, dass der Gehäusedeckel 212 aus elektrisch leitfähigem Material hergestellt ist, muss ein Abstand zwischen der Schirmung 4 und Gehäusedeckel 212 vorhanden sein, da ansonsten der Effekt der Reduktion der Wirbelstromverluste reduziert werden könnte. Es ist auch möglich, dass die Schirmung 4 an ihrem zweiten Schirmungsende 42 über ihre gesamte Ausdehnung in Umfangsrichtung einen dünnen Bereich, der sich in axialer Richtung A erstreckt, aufweist, der aus einem elektrisch nicht leitfähigen Material als Isolationsschicht hergestellt ist. Ebenso ist es möglich, solch eine Isolationsschicht durch Beschichten der Schirmung 4 am zweiten Schirmungsende 42 zu erreichen. In diesem Fall ist ein Kontakt zwischen der Schirmung 4 und dem Gehäusedeckel 212 auch möglich, wenn die Schirmung 4 aus elektrisch leitfähigem Material hergestellt ist.

Eine maximal mögliche Erstreckung der Schirmung 4 bis zu dem Gehäusedeckel 212 ist vorteilhaft, da wie bereits beschrieben, die meisten Streufelder am axial oberen Ende 22 des Stators 2 auftreten.

Die Schirmung 4 ist vorzugsweise aus einem hochpermeablen Material hergestellt. Dabei ist es bevorzugt, dass es sich hierbei um ein hochpermeables Material handelt, welches Eisen und/oder Silizium umfasst. Unter einem hochpermeablen Material wird ein Material verstanden, dass eine Permeabilitätszahl µ > 40 aufweist. Weitere Eigenschaften eines solchen bevorzugten Materials sind unter anderem, dass es eine geringe elektrische Leitfähigkeit und geringe Hystereseverluste aufweist.

Es sind ebenso Ausführungen möglich, bei denen die Schirmung 4 als Blech ausgestaltet ist. Dabei kann das Blech Eisen und/oder Silizium umfassen. Ebenso besteht die Möglichkeit ein Mu-Metall Blech und/oder ein Elektroblech, bevorzugt ein kornorientiertes Elektroblech, für die Schirmung 4 zu verwenden.

In dem ersten Ausführungsbeispiel sind die Spulenkerne 25 geblecht aus Elementen 253 hergestellt, wobei die Elemente 253 in Umfangsrichtung des Stators 2 gestapelt sind. Mit der Umfangsrichtung ist die Richtung gemeint, welche senkrecht auf der radialen Richtung R und senkrecht auf der axialen Richtung A steht. Die Elemente 253 können aus einem Elektroblech, bevorzugt einem nicht kornorientieren Elektroblech, hergestellt sein. Die Anzahl der Elemente 253 in allen Ausführungsbeispielen und Figuren ist rein exemplarisch zu verstehen. Die Anzahl kann grösser oder aber auch kleiner sein als dargestellt.

Des Weiteren weisen die Spulenkerne 25 in dem ersten Ausführungsbeispiel an einem axial oberen Ende 252 jeweils eine Abrundung auf, welche den Spulenkern 25 aus der axialen Richtung A in die radiale Richtung R umlenkt.

Gemäss einer speziell bevorzugten Ausgestaltung ist der Stator 2 so ausgestaltet, dass er zusätzlich zur berührungslos magnetischen Lagerung des Rotors 3 auch ein Drehmoment auf den Rotor 3 bzw. den magnetisch wirksamen Kern 31 des Rotors 3 ausüben kann, welches den Rotor 3 zu einer Rotation um die Solldrehachse antreibt. Das heisst, bei dieser bevorzugten Ausgestaltung ist der Rotor 3 mittels des Stators 2 zur Rotation um die axiale Richtung A antreibbar.

Bei dieser Ausgestaltung erzeugen die konzentrierten Wicklungen 61 also elektromagnetische Drehfelder, mit denen der Rotor 3 sowohl berührungslos magnetisch bezüglich des Stators 2 lagerbar ist als auch berührungslos zur Rotation um die axiale Richtung A antreibbar ist.

Es versteht sich, dass die Anzahl von sechs Spulenkernen 25 zwar bevorzugt, aber nur beispielhaft zu verstehen ist. Es sind natürlich auch solche Ausgestaltungen möglich, bei denen der Stator 2 weniger als sechs, z. B. fünf oder vier oder drei Spulenkerne 25 aufweist, oder solche Ausgestaltungen, bei denen der Stator 2 mehr als sechs, z. B. sieben oder acht oder neun Spulenkerne 25 aufweist oder eine beliebige grössere Anzahl von Spulenkernen 25.

Der Rotor 3 umfasst den magnetisch wirksamen Kern 31, welcher ring- oder scheibenförmig ausgestaltet ist. Der magnetisch wirksame Kern 31 ist gemäss der Darstellung in Fig. 1 als Ring ausgestaltet und definiert eine magnetische Mittelebene. Alternativ kann der magnetisch wirksame Kern 31 auch als Scheibe ausgestaltet sein. In der Regel ist bei einem scheibenförmigen oder ringförmigen magnetisch wirksamen Kern 31 die magnetische Mittelebene die geometrische Mittelebene des magnetisch wirksamen Kerns 31 des Rotors 3, die senkrecht zur axialen Richtung A liegt. Im Betriebszustand ist der magnetisch wirksame Kern 31 in einer radialen Ebene gelagert, welche senkrecht auf der axialen Richtung A steht.

Die radiale Ebene ist in Fig. 1 durch die Linie einer radialen Richtung R angedeutet, die senkrecht auf der axialen Richtung A steht. Die radiale Ebene ist diejenige Ebene, welche senkrecht auf der axialen Richtung A steht und eine radiale Richtung R enthält. Die radiale Ebene ist diejenige Ebene, in welcher der magnetisch wirksame Kern 31 des Rotors 3 im Betriebszustand aktiv magnetisch gelagert ist. Wenn der Rotor 3 nicht verkippt und in axialer Richtung A nicht ausgelenkt ist, liegt die magnetische Mittelebene in der radialen Ebene. Die radiale Ebene definiert die x-y-Ebene eines kartesischen Koordinatensystems, dessen z-Achse in axialer Richtung A verläuft.

Mit der radialen Position des magnetisch wirksamen Kerns 31 bzw. des Rotors 3 wird die Lage des Rotors 3 in der radialen Ebene bezeichnet.

Da es für das Verständnis der Erfindung ausreichend ist, ist in der Zeichnung in der Fig. 1 und in der Fig. 2 von dem Rotor 3 nur der magnetisch wirksame Kern 31 dargestellt. Es versteht sich, dass der Rotor 3 natürlich auch noch weitere Komponenten umfassen kann wie beispielsweise Ummantelungen oder Kapselungen des magnetisch wirksamen Kerns 31, die vorzugsweise aus einem Kunststoff hergestellt sind, oder aus einem Metall oder aus einer Metalllegierung oder aus einer Keramik bzw. einem keramischen Werkstoff. Ferner kann der Rotor 3 auch Flügel zum Mischen, Rühren oder Pumpen von Fluiden oder sonstige Komponenten umfassen.

Wenn der Rotor 3 in die becherförmige Ausnehmung 211 eingesetzt ist, wird der Rotor 3 und insbesondere der magnetisch wirksame Kern 31 des Rotors 3 von radial aussenliegend angeordneten Stirnflächen 272 der Querschenkel 27 der Spulenkerne 25 des Stators 2 umgeben. Die Querschenkel 27 bilden somit eine Mehrzahl von ausgeprägten Statorpolenhier sechs Statorpole.

Wenn sich der magnetisch wirksame Kern 31 des Rotors 3 während des Betriebs in seiner Soll-Position befindet, so ist der magnetisch wirksame Kern 31 zwischen den Stirnflächen 272 der Querschenkel 27 zentriert. Die konzentrierten Wicklungen 61 sind darstellungsgemäss unterhalb der radialen Ebene angeordnet und so ausgerichtet, dass ihre Spulenachsen in axialer Richtung A verlaufen.

Alle ersten Enden 261 der Längsschenkel 26 - also die darstellungsgemäss (Fig. 1) unteren Enden 261 - sind durch den Rückschluss 28 miteinander verbunden. Der Rückschluss 28 ist vorzugsweise ringförmig ausgestaltet. Dabei sind solche Ausgestaltungen möglich (siehe z. B. Fig. 1), bei welchen sich der Rückschluss 28 radial innenliegend entlang aller ersten Enden 261 der Längsschenkel 26 erstreckt.

Um die für die magnetische Lagerung des Rotors 3 und optional zur Erzeugung eines Drehmoments auf den Rotor 3 notwendigen elektromagnetischen Felder zu erzeugen, tragen die Längsschenkel 26 der Spulenkerne 25 die als konzentrierte Wicklungen 61 ausgestalteten Wicklungen.

Mit diesen konzentrierten Wicklungen 61 werden im Betriebszustand diejenigen elektromagnetischen Drehfelder erzeugt, mit welchen eine beliebig einstellbare Querkraft in radialer Richtung auf den Rotor 3 ausübbar ist, sodass die radiale Position des Rotors 3, also seine Position, in der zur axialen Richtung A senkrechten radialen Ebene aktiv steuerbar bzw. regelbar ist. Optional wird mit diesen elektromagnetischen Drehfeldern zusätzlich ein Drehmoment auf den Rotor 3 bewirkt.

Mit dem "magnetisch wirksamen Kern 31" des Rotors 3 ist derjenige Bereich des Rotors 3 gemeint, welcher für die Erzeugung der magnetischen Lagerkräfte und optional für die Drehmomentbildung magnetisch mit dem Stator 2 zusammenwirkt.

Wie bereits erwähnt, ist der magnetisch wirksame Kern 31 bei diesem Ausführungsbeispiel ringförmig ausgestaltet. Ferner ist der magnetisch wirksame Kern 31 permanentmagnetisch ausgestaltet. Dazu kann der magnetisch wirksame Kern 31 mindestens einen Permanentmagneten, aber auch mehrere Permanentmagnete umfassen oder - wie im hier beschriebenen Ausführungsbeispiel - vollständig aus einem permanentmagnetischen Material bestehen, sodass der magnetisch wirksame Kern 31 der Permanentmagnet ist. Der magnetisch wirksame Kern 31 ist beispielsweise in radialer Richtung magnetisiert.

Als Permanentmagnete bezeichnet man üblicherweise solche ferromagnetischen oder ferrimagnetischen Werkstoffe, die hartmagnetisch sind, also eine hohe Koerzitivfeldstärke aufweisen. Die Koerzitivfeldstärke ist diejenige magnetische Feldstärke, die man benötigt, um einen Stoff zu entmagnetisieren. Im Rahmen dieser Anmeldung wird unter einem Permanentmagneten ein Werkstoff bzw. ein Material verstanden, der eine Koerzitivfeldstärke, genauer gesagt eine Koerzitivfeldstärke der magnetischen Polarisation aufweist, die mehr als 10'000 A/m beträgt.

Es sind auch solche Ausgestaltungen möglich, bei denen der magnetisch wirksame Kern 31 permanentmagnetfrei, also ohne Permanentmagnete ausgestaltet ist. Der Rotor 3 ist dann z.B. als Reluktanzläufer ausgestaltet. Der magnetisch wirksame Kern 31 des Rotors 3 besteht dann beispielsweise aus einem weichmagnetischen Material. Geeignete weichmagnetische Materialien für den magnetisch wirksamen Kern 31 sind beispielsweise ferromagnetische oder ferrimagnetische Materialien, also insbesondere Eisen, Nickel-Eisen, Kobalt-Eisen, Silizium-Eisen, Mu-Metall.

Ferner sind Ausgestaltungen möglich, bei denen der magnetisch wirksame Kern 31 des Rotors 3 sowohl ferromagnetische Materialien als auch permanentmagnetische Materialien umfasst. Beispielsweise können Permanentmagnete in einen ferromagnetischen Grundkörper eingelegt bzw. eingesetzt werden. Solche Ausgestaltungen sind z.B. vorteilhaft, wenn man bei grossen Rotoren die Kosten durch Einsparen von permanentmagnetischem Material reduzieren will.

Auch sind Ausgestaltungen möglich, bei denen der Rotor nach dem Prinzip eines Käfigläufers ausgestaltet ist.

Der ringförmige Rückschluss 28 kann aus einem weichmagnetischen Material gefertigt sein, weil es als Flussleitelement zur Führung des magnetischen Flusses dient.

Geeignete weichmagnetische Materialien für den Rückschluss 28 sind beispielsweise ferromagnetische oder ferrimagnetische Materialien, also insbesondere Eisen, Nickel-Eisen, Kobalt-Eisen Silizium-Eisen oder Mu-Metall. Hierbei ist für den Stator 2 eine Ausgestaltung als Statorblechpaket bevorzugt, bei welcher der Rückschluss 28, geblecht ausgestaltet ist, das heisst er besteht aus mehreren dünnen Blechelementen, die parallel zueinander in axialer Richtung A aufeinandergestapelt sind. Alle Elemente sind identisch ausgestaltet, hier also jeweils im Wesentlichen ringförmig und auch mit der gleichen Dicke. Somit ist der Rückschluss 28 selbst im Wesentlichen ringförmig ausgestaltet und erstreckt sich im zusammengesetzten Zustand radial innenliegend entlang der ersten Enden 261 der Längsschenkel 26.

Ferner ist es möglich, dass der Rückschluss 28 aus gepressten und anschliessend gesinterten Körnern der genannten Materialien bestehen. Die metallischen Körner sind dabei vorzugsweise in eine Kunststoffmatrix eingebettet, sodass sie zumindest teilweise gegeneinander isoliert sind, wodurch sich Wirbelstromverluste minimieren lassen. Es sind also für den Stator 2 auch weichmagnetische Verbundwerkstoffe geeignet, welche aus elektrisch isolierten und zusammengepressten Metallpartikeln bestehen. Insbesondere können diese weichmagnetischen Verbundwerkstoffe, die auch als SMC (Soft Magnetic Composites) bezeichnet werden, aus Eisenpulverpartikeln bestehen, die mit einer elektrisch isolierenden Schicht beschichtet sind. Diese SMC werden dann mittels pulvermetallurgischer Verfahren zu der gewünschten Ausgestaltung geformt.

Ebenso sind Ausgestaltungen denkbar, bei welchen als Rückschluss 28 ein sog. Ringbandkern verwendet wird. Dabei handelt es sich um ein aufgewickeltes Band aus Elektroblech. Bevorzugt wird hierbei kornorientiertes Elektroblech benutzt. Ringbandkerne sind im Stand der Technik vor allem bei der Verwendung für Transformatoren, Übertrager, Induktivitäten bekannt aber nicht für Lagervorrichtungen und vor allem nicht für elektromagnetische Drehantriebe.

Während des Betriebs der Magnetlagervorrichtung 1 wirkt, der magnetisch wirksame Kern 31 des Rotors 3 mit dem Stator 2 zusammen, derart, dass der Rotor 3 berührungslos magnetisch bezüglich des Stators 2 lagerbar ist, und vorzugsweise zusätzlich berührungslos magnetisch in Rotation um die axiale Richtung A versetzt werden kann. Dabei ist es besonders vorteilhaft, dass dieselben Wicklungen 61 mit denen die magnetische Lagerung des Rotors 3 bewirkt wird, auch zur Erzeugung eines Drehmoments auf den Rotor 3 dienen. Vorzugsweise sind dann drei Freiheitsgrade des Rotors 3, nämlich seine Position in der radialen Ebene und seine Rotation, aktiv regelbar. Bezüglich seiner axialen Auslenkung aus der radialen Ebene in axialer Richtung A ist der magnetisch wirksame Kern 31 des Rotors 3 passiv magnetisch, das heisst nicht ansteuerbar, durch Reluktanzkräfte stabilisiert. Auch bezüglich der verbleibenden zwei Freiheitsgrade, nämlich Verkippungen bezüglich der zur Solldrehachse senkrechten radialen Ebene ist der magnetisch wirksame Kern 31 des Rotors 3 ebenfalls passiv magnetisch stabilisiert. Der Rotor 3 ist also durch das Zusammenwirken des magnetisch wirksamen Kerns 31 mit den Spulenkernen 25 in axialer Richtung A sowie gegen Verkippungen (insgesamt drei Freiheitsgrade) passiv magnetisch gelagert oder passiv magnetisch stabilisiert und in der radialen Ebene (zwei Freiheitsgrade) aktiv magnetisch gelagert.

Wie dies allgemein üblich ist, bezeichnet auch im Rahmen dieser Anmeldung eine aktive magnetische Lagerung eine solche, die aktiv steuer- bzw. regelbar ist, beispielsweise über die mit den konzentrierten Wicklungen 61 generierten elektromagnetischen Felder. Eine passive magnetische Lagerung oder eine passive magnetische Stabilisierung bezeichnet eine solche, die nicht ansteuerbar bzw. regelbar ist. Die passive magnetische Lagerung oder Stabilisierung basiert beispielsweise auf Reluktanzkräften, welche den Rotor 3 bei einer Auslenkung aus seiner Soll-Position, also z. B. bei einer Verschiebung oder Auslenkung in axialer Richtung A oder bei einer Verkippung, wieder in seine Soll-Position bringen.

Bei der Magnetlagervorrichtung 1 wird im Unterschied zu klassischen Magnetlagern die magnetische Lagerung - und optional die Generierung eines auf den Rotor wirkenden Drehmoments - über elektromagnetische Drehfelder realisiert. Zur kombinierten Erzeugung der magnetischen Lagerkräfte und eines Drehmoments zum Rotieren des Rotors 3 um die axiale Richtung A ist es einerseits möglich - wie in Fig 1 gezeigt-, an jedem Längsschenkel 26 genau eine konzentrierte Wicklung 61 anzuordnen.

Andererseits sind auch Ausgestaltungen möglich, bei denen zur kombinierten Erzeugung der magnetischen Lagerkräfte und eines Drehmoments zum Rotieren des Rotors 3 zwei unterschiedliche Wicklungssysteme vorgesehen sind. Dazu sind dann beispielsweise an jedem Längsschenkel 26 jeweils genau zwei konzentrierte Wicklungen 61a, 61b angeordnet (siehe z. B. Fig. 4), die bezüglich der axialen Richtung A benachbart zueinander angeordnet sind. Eine dieser beiden Wicklungen 61a, 61b gehört zu dem ersten der beiden Wicklungssysteme und die andere zu dem zweiten der beiden Wicklungssysteme.

Bei der in Fig. 1 dargestellten Ausführungsform mit genau einer konzentrierten Wicklung 61 an jedem Spulenkern 25 werden beispielsweise die in einer Kontrolleinheit jeweils ermittelten Werte für den für die Lagerung benötigten Strom und den für die Erzeugung des Drehmoments benötigten Strom rechnerisch -also z. B. mit Hilfe von Software - addiert bzw. überlagert. Der sich daraus ergebende Gesamtstrom wird dann in die jeweilige konzentrierte Wicklung 61 eingeprägt.

Ist der Stator 2 der erfindungsgemässen Magnetlagervorrichtung 1 zur Erzeugung eines Drehmoments ausgestaltet, so ist die Magnetlagervorrichtung 1 für einen elektromagnetischen Drehantrieb, der als Tempelmotor ausgestaltet ist, geeignet. Ebenso ist es möglich, dass die erfindungsgemässe Magnetlagervorrichtung 1 auch für andere Vorrichtungen wie z.B. Zentrifugalpumpen, Mischvorrichtungen zum Mischen fliessfähiger Substanzen, Rührvorrichtungen, beispielsweise zum Durchmischen eines Fluids in einem Tank, Lüfter oder auch Vorrichtungen zum Tragen und Rotieren von Wafern, beispielsweise in der Halbleiterfertigung, geeignet ist.

Fig. 3 zeigt eine Schnittdarstellung eines zweiten Ausführungsbeispiels einer erfindungsgemässen Magnetlagerlagervorrichtung 1. Der Schnitt ist entlang der axialen Richtung A durchgeführt. In der folgenden Beschreibung des zweiten Ausführungsbeispiels werden nur die Unterschiede zum ersten Ausführungsbeispiel aus Fig. 1 näher erläutert. Die Erläuterungen zum ersten Ausführungsbeispiel gelten in gleicher Weise oder sinngemäß auch für das zweite Ausführungsbeispiel. Gleiche Bezugsziffern bezeichnen die gleichen Merkmale, die unter Bezugnahme auf das erste Ausführungsbeispiel erläutert wurden, oder funktionell gleichwertige Merkmale.

In dem zweiten Ausführungsbeispiel ist ein Unterschied, dass das erste Schirmungsende 41 bezüglich der axialen Richtung A auf derselben Höhe angeordnet, wie das erste Wicklungsende 611. Die Vorteile hiervon wurden bereits erläutert.

Fig. 4 zeigt eine Schnittdarstellung eines dritten Ausführungsbeispiels einer erfindungsgemässen Magnetlagerlagervorrichtung 1. Der Schnitt ist entlang der axialen Richtung A durchgeführt. In der folgenden Beschreibung des dritten Ausführungsbeispiels werden nur die Unterschiede zu den vorherigen Ausführungsbeispielen näher erläutert. Die Erläuterungen zu den vorherigen Ausführungsbeispielen gelten in gleicher Weise oder sinngemäß auch für das dritte Ausführungsbeispiel. Gleiche Bezugsziffern bezeichnen die gleichen Merkmale, die unter Bezugnahme auf die vorherigen Ausführungsbeispiele erläutert wurden, oder funktionell gleichwertige Merkmale.

Ein Unterschied in diesem Ausführungsbeispiel ist, dass die Schirmung 4 als eine Beschichtung 43 ausgestaltet ist, welche vorzugsweise auf einer radial innenliegenden Seite 213 des Statorgehäuses 21 aufgebracht ist. Die Beschichtung 43 hat den Vorteil, dass diese auf das sowieso vorhandene Statorgehäuse 21 mit Hilfe der üblichen, aus dem Stand der Technik bekannten Beschichtungsmethoden (z.B. PVD-Methode, thermisches Spritzen) aufgebracht werden kann. Dadurch wird kein zusätzliches Material (wie z.B. Elektroblech) für die Schirmung 4 benötigt und die Schirmung 4 kann bereits bei der Herstellung des Statorgehäuses 21 aufgebracht werden, was einen zusätzlichen Arbeitsschritt spart. Bevorzugt umfasst die Beschichtung 43 Eisen und/oder kunststoffgebundene Metallpartikel. Bevorzugt ist die Schichtdicke grösser 50 Mikrometer.

Die Beschichtung 43 kann sich über die gesamte radial innenliegenden Seite 213 des Statorgehäuses 21 in axialer Richtung A erstrecken oder aber auch nur über einen Bruchteil der Erstreckung der radial innenliegenden Seite 213 in axialer Richtung A. Es ist z.B. möglich, dass die Beschichtung 43 nur im Bereich zwischen dem ersten Wicklungsende 611 und dem zweiten Wicklungsende 612 auf die radial innenliegenden Seite 213 des Statorgehäuses 21 aufgebracht ist. Vorzugsweise erstreckt sich die Beschichtung 43 über den gesamten Umfang der radial innenliegenden Seite 213 des Statorgehäuses 21.

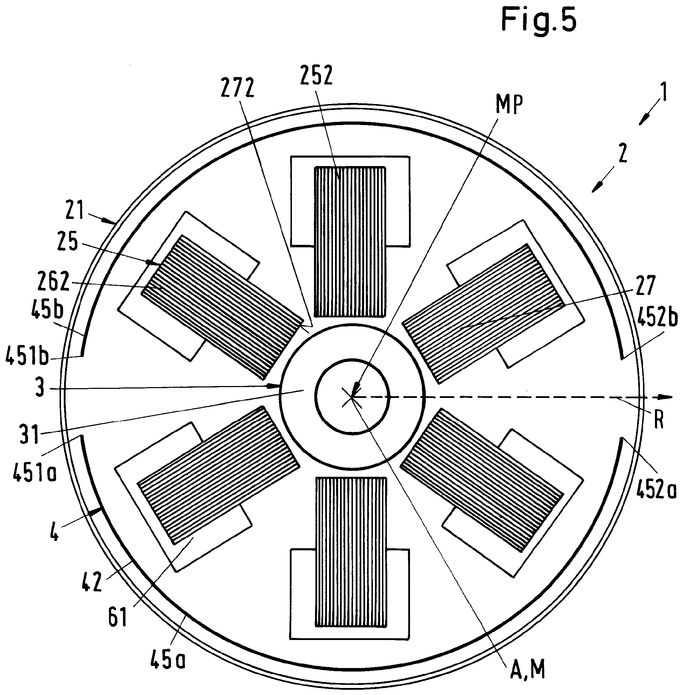

Fig. 5 zeigt eine Schnittdarstellung eines vierten Ausführungsbeispiels einer erfindungsgemässen Magnetlagerlagervorrichtung 1. Der Schnitt ist in diesem Fall in der radialen Ebene erfolgt. In der folgenden Beschreibung des vierten Ausführungsbeispiels werden nur die Unterschiede zu den vorherigen Ausführungsbeispielen näher erläutert. Die Erläuterungen zu den vorherigen Ausführungsbeispielen gelten in gleicher Weise oder sinngemäß auch für das vierte Ausführungsbeispiel. Gleiche Bezugsziffern bezeichnen die gleichen Merkmale, die unter Bezugnahme auf die vorherigen Ausführungsbeispiele erläutert wurden, oder funktionell gleichwertige Merkmale.

Ein Unterschied in diesem Ausführungsbeispiel ist, dass die Schirmung 4 zwei Schirmungssegmente 45a, 45b umfasst, von denen sich jedes von einem ersten Segmentende 451a, 451b in Umfangsrichtung zu einem zweiten Segmentende 452a, 452b erstreckt. Dabei ist die Anzahl der Schirmungssegmente 45a, 45b, rein exemplarisch zu verstehen. Die Schirmung 4 umfasst mindestens zwei Schirmungssegmente 45a, 45b, aber kann auch mehr als zwei, z.B. drei, vier, fünf oder noch mehr Schirmungssegmente 45 umfassen.

Es ist möglich, dass die Schirmungssegmente 45a, 45b, aus unterschiedlichen Materialien gefertigt sind.

In diesem Ausführungsbeispielen sind die Schirmungssegmente 45a, 45b in Umfangsrichtung benachbart zueinander angeordnet und haben einen Abstand zueinander, d.h. die ersten und zweiten Segmentenden 451a, 451b, 452a, 452b stehen in diesem Ausführungsbeispiel nicht in Kontakt. Es ist aber auch möglich, dass alle oder auch nur ein Teil der Segmentenden 451a, 451b, 452a, 452b untereinander kontaktiert sind oder sich die Schirmungssegmente 45a, 45b überlappen.

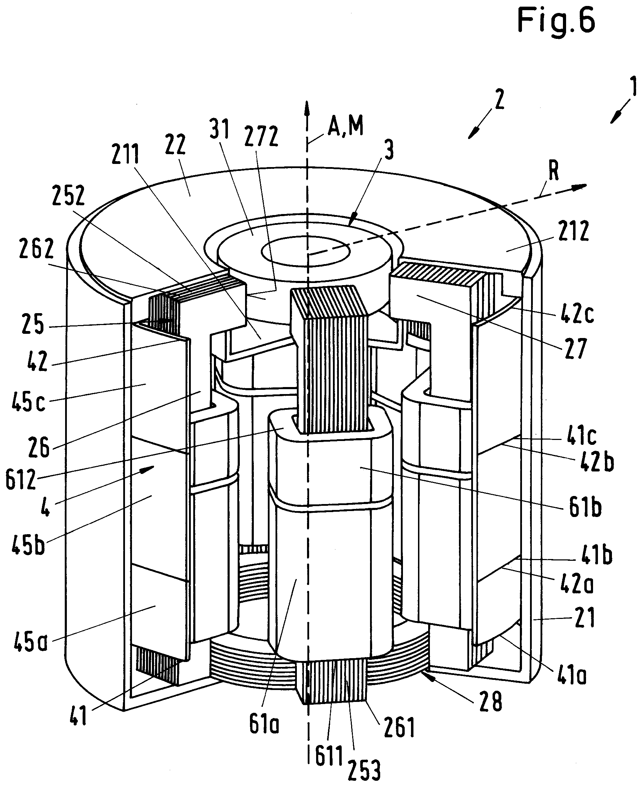

Ebenso sind Ausführungsformen möglich, wobei die Schirmungssegmente 45a, 45b in axialer Richtung A benachbart zueinander angeordnet sind. Solch eine Ausführungsform ist in Fig. 6 abgebildet.

Fig. 6 zeigt eine perspektivische Darstellung eines fünften Ausführungsbeispiels einer erfindungsgemässen Magnetlagerlagervorrichtung 1, wobei ein Teil des Statorgehäuses 21 entfernt ist. In der folgenden Beschreibung des fünften Ausführungsbeispiels werden nur die Unterschiede zu den vorherigen Ausführungsbeispielen näher erläutert. Die Erläuterungen zu den vorherigen Ausführungsbeispielen gelten in gleicher Weise oder sinngemäß auch für das fünfte Ausführungsbeispiel. Gleiche Bezugsziffern bezeichnen die gleichen Merkmale, die unter Bezugnahme auf die vorherigen Ausführungsbeispiele erläutert wurden, oder funktionell gleichwertige Merkmale.

Ein Unterschied zu den vorherigen Ausführungsbeispielen ist, dass beim diesem Ausführungsbeispiel die Schirmung 4 mehrere - hier drei - Schirmungssegmente 45a, 45b, 45c umfasst, die bezüglich der axialen Richtung A benachbart zueinander angeordnet sind. Dabei ist die Anzahl der Schirmungssegmente 45a, 45b, 45c rein exemplarisch zu verstehen. In diesem Ausführungsbeispiel ist die Ausdehnung der einzelnen Schirmungssegmente 45a, 45b, 45c im Vergleich zueinander unterschiedlich. In anderen Worten die Breite der einzelnen Schirmungssegmente 45a, 45b, 45c in axialer Richtung A ist unterschiedlich. Es sind aber auch Ausführungsbeispiele möglich, bei denen die Schirmungssegmente 45a, 45b, 45c die gleiche Breite in axialer Richtung A aufweisen. Die drei Schirmungssegmente 45a, 45b, 45c weisen in diesem Ausführungsbeispiel alle die gleiche Form auf. Es ist aber ebenso möglich, dass in anderen Ausführungsbeispielen die einzelnen Schirmungssegmente 45a, 45b, 45c unterschiedlich in ihrer Form ausgestaltet sind. Dabei ist zu beachten, dass die Schirmungssegemente 45a, 45b, 45c derart ausgestaltet sind, dass sie an einem jeweiligen ersten axialen Segmentende 41a, 41b, 41c mit dem entsprechenden jeweiligen zweiten axialen Segmentende 42a, 42b, 42c benachbart zueinander angeordnet werden können.

Ein zweiter Unterschied ist, dass die Spulenkerne 25 keine Abrundung am axial oberen Ende 252 aufweisen. Ein weiterer Unterschied ist, dass hier an jedem Längsschenkel 26 genau zwei konzentrierte Wicklungen 61a, 61b vorgesehen sind, von denen jede den jeweiligen Längsschenkel 26 umgibt, und die bezüglich der axialen Richtung A benachbart zueinander angeordnet sind. Für diesen Fall, dass mehr als eine Wicklung 61a, 61b am jeweiligen Längsschenkel 26 angeordnet ist, ist das erste Wicklungsende 611, das erste Wicklungsende 611 derjenigen Wicklung 61a, welche in axialer Richtung A näher am ersten Ende 261 des Längsschenkels 26 angeordnet ist. In anderen Worten, das erste Wicklungsende 611 ist das axial untere Ende der axial untersten Wicklung 61a, welche am Längsschenkel 26 angeordnet ist. Dabei gilt wieder die Definition, dass mit «unten» näher am ersten Ende 261 des Längsschenkels 26 und mit «oben» in näher am zweiten Ende 262 des Längsschenkels 26, gemeint ist.

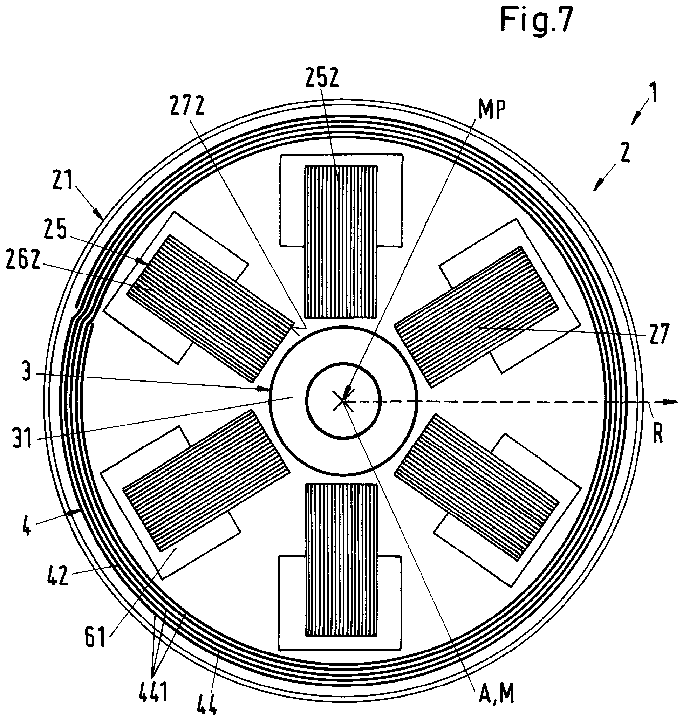

Fig. 7 zeigt eine Schnittdarstellung eines sechsten Ausführungsbeispiels einer erfindungsgemässen Magnetlagerlagervorrichtung 1. Der Schnitt ist in diesem Fall in der radialen Ebene erfolgt. In der folgenden Beschreibung des sechsten Ausführungsbeispiels werden nur die Unterschiede zu den vorherigen Ausführungsbeispielen näher erläutert. Die Erläuterungen zu den vorherigen Ausführungsbeispielen gelten in gleicher Weise oder sinngemäß auch für das sechste Ausführungsbeispiel. Gleiche Bezugsziffern bezeichnen die gleichen Merkmale, die unter Bezugnahme auf vorherige Ausführungsbeispiele erläutert wurden, oder funktionell gleichwertige Merkmale.

Ein Unterschied hier ist, dass die Schirmung als ein Band 44 ausgestaltet ist, wobei das Band 44 mehrere Bandwicklungen 441 formt, die bezüglich der radialen Richtung R flächig aneinander anliegen. Dabei ist besonders bevorzugt, dass die mehreren Bandwicklungen 441 gegeneinander isoliert sind.

Hierbei kann das Band 44 aus einem Elektroblech, bevorzugt einem kornorientieren Elektroblech hergestellt sein. Unter einem Elektroblech wird nach der allgemeinen Definition ein weichmagnetischer Werkstoff für Magnetkerne verstanden. Ebenso besteht die Möglichkeit Mu-Metall das Band 44 zu verwenden.

Der Vorteil hierbei ist, dass solche Bänder 44 eine häufige Verwendung in der Technik finden und somit kostengünstig sind. Des Weiteren ist es vorteilhaft, dass ein Band 44 relativ einfach hergestellt werden kann und es möglich ist, die Bandwicklungen 441 direkt bei der Herstellung gegeneinander zu isolieren

Es versteht sich von selbst, dass alle in der Figurenbeschreibung gezeigten Ausführungsbeispiele mit ihren jeweiligen Eigenarten in jeglicher Form kombinierbar sind.

Des Weiteren ist es möglich, dass sämtliche gezeigten Ausführungsbeispiele mit Spulenkernen 25 ausgestaltet werden können, welche derart ausgestaltet sind, dass der dem Rotor 3 zu Verfügung stehende Platz in der Magnetlagervorrichtung 1 vergrössert wird. Dies gelingt durch eine spezielle äussere Form der Spulenkerne 25.

Dabei wird der Spulenkern 25 in einen axial unteren Abschnitt und einen axial oberen Abschnitt aufgeteilt, wobei der untere Abschnitt und der obere Abschnitt bezüglich der axialen Richtung A benachbart zueinander angeordnet sind. Der Querschenkel 27 ist an dem axial oberen Abschnitt angeordnet. Für jeden Spulenkern 25 weist die Stirnfläche 272 des Querschenkels 27 von dem axial unteren Abschnitt des zugehörigen Längsschenkels 26 einen ersten Abstand in radialer Richtung auf, und von dem axial oberen Abschnitt einen zweiten Abstand in radialer Richtung, wobei der zweite Abstand grösser ist als der erste Abstand. Dies bedeutet, dass jeder Längsschenkel 26 derart ausgestaltet ist, dass der axial obere Abschnitt bezüglich des axial unteren Abschnitts in radialer Richtung nach aussen verschoben ist, sodass sich der für den Rotor 3 zur Verfügung stehende Platz zwischen den Stirnflächen 272 vergrössert, ohne dass dabei die Gefahr eines direkten Übertritts des magnetischen Flusses zwischen dem Längsschenkel 26 und dem magnetisch wirksamen Kern 31 des Rotors 3 besteht. Dadurch, dass die axial oberen Abschnitte bezüglich der radialen Richtung und relativ zu den axial unteren Abschnitten radial nach aussen versetzt sind, vergrössert sich der Abstand, nämlich der zweite Abstand, zwischen den Längsschenkeln 26 und den Stirnflächen 272 im Bereich der axial oberen Abschnitte. Dadurch vergrössert sich auch der Abstand zwischen dem magnetisch wirksamen Kern 31 des Rotors und den Längsschenkeln 26 insbesondere im Bereich der axial oberen Abschnitte.

Solche gerade beschriebenen Spulenkerne 25 sind analog zu denen in Fig. 3 in der Europäischen Patentanmeldung EP4084304A1 abgebildeten Spulenkerne ausgebildet.

## Patentansprüche

1. Magnetlagervorrichtung zur berührungslos magnetischen Lagerung eines Rotors (3), der einen scheibenförmigen oder ringförmigen magnetisch wirksamen Kern (31) umfasst, wobei die Magnetlagervorrichtung einen Stator (2) mit einem Statorgehäuse (21) aufweist, welcher eine Mehrzahl von Spulenkernen (25) umfasst, von denen jeder einen Längsschenkel (26) umfasst, welcher sich von einem ersten Ende (261) in einer axialen Richtung (A) bis zu einem zweiten Ende (262) erstreckt, sowie einen Querschenkel (27), welcher an dem zweiten Ende (262) des Längsschenkels angeordnet ist, und sich in einer radialen Richtung (R) erstreckt, die senkrecht zur axialen Richtung (A) ist, wobei am ersten Ende (261) ein Rückschluss (28) angeordnet ist, der die ersten Enden (261) aller Längsschenkel (26) verbindet, wobei an jedem Längsschenkel (26) mindestens eine konzentrierte Wicklung (61; 61a, 61b) vorgesehen ist, welche den jeweiligen Längsschenkel (26) umgibt, wobei der Stator (2) ferner eine becherförmige Ausnehmung (211) aufweist, in welche der Rotor (3) einsetzbar ist, wobei die becherförmige Ausnehmung (211) an einem axialen Ende des Stators (2) angeordnet ist, und wobei die Querschenkel (27) um die becherförmige Ausnehmung (211) herum angeordnet sind,
**dadurch gekennzeichnet, dass**
der Stator (2) eine Schirmung (4) umfasst, welche sich in Umfangsrichtung entlang einer Mehrzahl von Spulenkernen (25) erstreckt, und wobei sich die Schirmung (4) in axialer Richtung (A) von einem ersten Schirmungsende (41) bis zu einem zweiten Schirmungsende (42) erstreckt.

2. Magnetlagervorrichtung nach Anspruch 1, wobei die Schirmung (4) radial aussenliegend um die Spulenkerne (25) herum angeordnet ist und sich in Umfangsrichtung über einen Winkel von mindestens 120 Grad, bevorzugt mindestens 240 Grad erstreckt.

3. Magnetlagervorrichtung nach einem der vorangehenden Ansprüche, wobei die Schirmung (4) ringförmig ausgestaltet ist.

4. Magnetlagervorrichtung nach einem der vorangehenden Ansprüche, wobei die Schirmung (4) mindestens zwei Schirmungssegmente (45a, 45b) umfasst, von denen sich jedes von einem ersten Segmentende (451a, 451b) in Umfangsrichtung zu einem zweiten Segmentende (452a, 452b) erstreckt.

5. Magnetlagervorrichtung nach Anspruch 4, wobei die Schirmungssegmente (45a, 45b) in Umfangsrichtung benachbart zueinander angeordnet sind.

6. Magnetlagervorrichtung nach einem der Ansprüche 1-3, wobei die Schirmung (4) als ein Band (44) ausgestaltet ist, wobei das Band (44) mehrere Bandwicklungen (441) formt, die bezüglich der radialen Richtung (R) flächig aneinander anliegen.

7. Magnetlagervorrichtung nach einem der vorangehenden Ansprüche, wobei das erste Schirmungsende (41) bezüglich der axialen Richtung (A) auf derselben Höhe angeordnet ist, wie ein erstes Wicklungsende (611).

8. Magnetlagervorrichtung nach einem der Ansprüche 1-5, wobei das erste Schirmungsende (41) bezüglich der axialen Richtung (A) oberhalb des ersten Wicklungsendes (611) angeordnet ist.

9. Magnetlagervorrichtung nach einem der vorangehenden Ansprüche, wobei sich die Schirmung (4) bezüglich der axialen Richtung bis zu einem Gehäusedeckel (212) des Stators (2) erstreckt, wobei der Gehäusedeckel (212) an einem ersten Ende (22) des Stators (2) angeordnet ist.

10. Magnetlagervorrichtung nach einem der vorangehenden Ansprüche, wobei die Schirmung (4) aus einem hochpermeablen Material hergestellt ist, bevorzugt aus einem hochpermeablen Material umfassend Eisen und Silizium.

11. Magnetlagervorrichtung nach einem der Ansprüche 1-3, 6-9, wobei die Schirmung (4) als eine Beschichtung (43) ausgestaltet ist, welche vorzugsweise auf einer radial innenliegenden Seite (213) des Statorgehäuses (21) aufgebracht ist.

12. Magnetlagervorrichtung nach einem der Ansprüche 1-9, wobei die Schirmung (4) als Blech ausgestaltet ist.

13. Magnetlagervorrichtung nach einem der vorangehenden Ansprüche, wobei an jedem Längsschenkel (26) zwei konzentrierte Wicklungen (61a, 61b) vorgesehen sind, von denen jede den jeweiligen Längsschenkel (26) umgibt, und die bezüglich der axialen Richtung (A) benachbart zueinander angeordnet sind.

14. Magnetlagervorrichtung nach einem der vorangehenden Ansprüche, wobei der Stator (2) zur Erzeugung eines Drehmoments ausgestaltet ist, mit welchem der Rotor (3) berührungslos magnetisch zur Rotation um die axiale Richtung (A) antreibbar ist.

15. Elektromagnetischer Drehantrieb, der als Tempelmotor ausgestaltet ist, **dadurch gekennzeichnet, dass** der elektromagnetische Drehantrieb eine Magnetlagervorrichtung (1) gemäss Anspruch 14 umfasst, sowie einen Rotor (3) mit einem scheibenförmigen oder ringförmigen magnetisch wirksamen Kern (31), wobei der Rotor (3) in die becherförmige Ausnehmung (211) einsetzbar ist, und wobei der Rotor (3) als Rotor (3) des elektromagnetischen Drehantriebs ausgestaltet ist.
